(19)

**Europäisches Patentamt**
**European Patent Office**
**Office européen des brevets**

(11) **EP 2 827 467 A2**

(12) **EUROPEAN PATENT APPLICATION**

(43) Date of publication:
**21.01.2015 Bulletin 2015/04**

(51) Int Cl.:
*H02J 3/32* (2006.01)  *H02J 3/38* (2006.01)
*H02J 7/35* (2006.01)

(21) Application number: **14177357.2**

(22) Date of filing: **17.07.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.07.2013 US 201361847761 P**

(71) Applicant: **Solantro Semiconductor Corp.**
**Ottawa, Ontario K2E 7Y1 (CA)**

(72) Inventors:
• **Trescases, Olivier**
  **Toronto, Ontario M4G 1R9 (CA)**
• **Poshtkouhi, Shahab**
  **Toronto, Ontario M2N 7L7 (CA)**

(74) Representative: **Zacco Denmark A/S**
**Arne Jacobsens Allé 15**
**2300 Copenhagen S (DK)**

(54) **Stabilized power generation**

(57)   Stabilized power generation apparatus and techniques are disclosed. A stabilized power generator includes a power generating component (302), an energy store (330), a bi-directional Direct Current (DC) / DC converter (320), and a bi-directional DC / Alternating Current (AC) converter (316). The bi-directional DC/DC converter (320) is electrically coupled between the power generating component (302) and the energy store (330). The bi-directional DC/AC converter (316) is electrically coupled at a DC side of the bi-directional DC/AC converter to a circuit path between the power generating component (302) and the bidirectional DC/DC converter (320), and is to be electrically coupled at an AC side of the bi-directional DC/AC converter to an electrical grid (V_GRID, 340, 342). Distributed storage is thereby provided at each power generator, and the converters are controllable to provide MPP tracking in PV systems, power smoothing, and/or maintenance of State of Charge (SoC) of the energy store.

FIG. 3

EP 2 827 467 A2

## Description

### Field of the Invention

This invention relates generally to power generation and, in particular, to stabilizing a renewable power generating component's output.

### Background

The output of a power generating component could be subject to variation. In the case of a photovoltaic (PV) cell, panel, or panel array for example, output power variations could be caused by clouds, shadows etc. In the case of a wind turbine the power output could be similarly affected by changes in wind speed or direction.

### Summary

According to an embodiment, a stabilized power generator includes a power generating component, an energy store, a bi-directional Direct Current (DC) / DC converter, and a bi-directional DC / Alternating Current (AC) converter. The bi-directional DC/DC converter is electrically coupled between the power generating component and the energy store. The bi-directional DC/AC converter is electrically coupled at a DC side of the bi-directional DC/AC converter to a circuit path between the power generating component and the bi-directional DC/DC converter, and is to be electrically coupled at an AC side of the bi-directional DC/AC converter to an electrical grid.

The stabilized power generator could also include a single physical enclosure, attached to the power generating component, to enclose the energy store, the bi-directional DC/DC converter, and the bi-directional DC/AC converter.

The power generating component includes a PV panel in an embodiment, or could include multiple panels.

The energy store could include, for example, a capacitor, a battery, and/or an ultracapacitor.

In an embodiment, the bi-directional DC/AC converter includes a first DC/DC stage electrically coupled to the circuit path between the power generating component and the bi-directional DC/DC converter, and the first DC/DC stage includes a Dual Active Bridge (DAB) circuit.

A controller could be coupled to the bi-directional DC/AC converter, to control current flowing through the bi-directional DC/AC converter by controlling switching in the bi-directional DC/AC converter, with the current flowing through the bi-directional DC/AC converter in turn controlling storage current flowing to or from the energy store.

In an embodiment in which the power generating component includes a PV panel, the stabilized power generator could also include a controller, coupled to the bi-directional DC/DC converter, to control voltage at a PV panel side of the bi-directional DC/DC converter at which the bi-directional DC/DC converter is electrically coupled to the PV panel, by controlling switching in the bi-directional DC/DC converter. The controller could be configured to control switching in the bi-directional DC/DC converter to track Maximum Power Point (MPP) for the PV panel.

A stabilized power generator could also include a controller to control charging and discharging of the energy store to provide power smoothing of output power from the power generating component.

The controller could be configured to calculate an expected power output of the power generating component, and to control charging and discharging of the energy store based on the expected power output.

The controller could be configured to calculate an expected power output of the power generating component based on previous, time averaged power values of the output power from the power generating component.

The controller could be configured to calculate an expected power output of the power generating component based on a moving average of the output power P from the power generating component, the moving average comprising a Hull Moving Average (HMA) of a form:

$$HMA = WMA\left(2 * WMA\left(P, {}^{M}\!/_{2}\right) - WMA(P, M), \sqrt{M}\right)$$

where $WMA(f(x), M)$
is a weighted moving average of the function f(x) calculated over the last M values.

In some embodiments, the stabilized power generator includes a controller to control charging and discharging of the energy store based on maintaining a State of Charge (SoC) of the energy store at a target value. The target value of the SoC could be 50%, for example.

The controller could be coupled to the bi-directional DC/AC converter, to control the bi-directional DC/AC converter to convert power from the electrical grid to DC for charging the energy store and maintaining the State of Charge (SoC) of the energy store at the target value

The stabilized power generator could include a controller to control charging and discharging of the energy store to provide both power smoothing of output power from the power generating component and maintenance of a State of Charge (SoC) of the energy store at a target value, with the controller being configured to control the maintenance of the SoC with a slower response time than a response time of the power smoothing.

A method according to another aspect of the invention involves controlling a bi-directional DC/DC converter, electrically coupled between a power generating component and an energy store, for DC/DC conversion of power flow into and out of the energy store; and controlling a bi-directional DC/AC converter, electrically coupled at a DC side of the bi-directional DC/AC converter to a circuit path between the power generating component and the bi-directional DC/DC converter and to be electrically coupled at an AC side of the bi-directional DC/AC converter to an electrical grid, for AC/DC conversion of power flow between the AC grid and the bi-directional DC/DC converter.

The power generating component could include one or more PV panels.

In an embodiment, the power generating component includes a PV panel, controlling the bi-directional DC/DC converter involves controlling voltage at a PV panel side of the bi-directional DC/DC converter at which the bi-directional DC/DC converter is electrically coupled to the PV panel, by controlling switching in the bi-directional DC/DC converter, and controlling the bi-directional DC/DC converter further includes controlling switching in the bi-directional DC/DC converter to track MPP for the PV panel.

Controlling the bi-directional DC/AC converter could involve controlling current flowing through the bi-directional DC/AC converter by controlling switching in the bi-directional DC/AC converter. The current flowing through the bi-directional DC/AC converter controls storage current flowing to or from the energy store.

The storage current controls charging and discharging of the energy store to provide power smoothing of output power from the power generating component in an embodiment.

In another embodiment, the storage current controls charging and discharging of the energy store, the method further includes calculating an expected power output of the power generating component, and controlling current flowing through the bi-directional DC/AC converter involves controlling the current based on the expected power output.

Calculating the expected power output could involve calculating the expected power output based on previous, time averaged power values of the output power from the power generating component.

In another embodiment, calculating the expected power output involves calculating the expected power output based on a moving average of the output power P from the power generating component, the moving average comprising a Hull Moving Average (HMA) of a form:

$$HMA = WMA\left(2*WMA\left(P, {}^{M}\!/_{2}\right) - WMA(P, M), \sqrt{M}\right)$$

where $WMA(f(x), M)$
is a weighted moving average of the function f(x) calculated over the last M values.

Controlling current flowing through the bi-directional DC/AC converter could involve controlling the current to provide both power smoothing of output power from the power generating component and maintenance of a State of Charge (SoC) of the energy store at a target value, with the controlling involving control for maintenance of the SoC with a slower response time than a response time of control for power smoothing.

A microgrid includes an AC power grid and a stabilized power generator. The stabilized power generator includes a power generating component, an energy store, a bi-directional Direct Current (DC) / DC converter electrically coupled between the power generating component and the energy store, and a bi-directional DC / Alternating Current (AC) converter having a DC port and an AC port, and electrically coupled to the DC/DC converter at its DC port and connected to the AC power grid at its AC port.

Other aspects and features of embodiments of the present disclosure will become apparent to those ordinarily skilled in the art upon review of the following description.

## Brief Description of the Drawings

Examples of embodiments of the invention will now be described in greater detail with reference to the accompanying drawings.

FIG. 1 is a block diagram of a conventionally stabilized power generation system.

FIG. 2 is a block diagram of an example stabilized PV power system using integrated energy storage.

FIG. 3 is a block diagram of an example PV generator.

FIG. 4 is a schematic diagram of an example synchronous half bridge DC/DC converter connected to a PV panel and a capacitance.

FIG. 5A is a schematic diagram of an example isolated Dual Active Bridge (DAB).

FIG 5B is an example control flow diagram.

FIG. 6 is a schematic diagram of an example synchronous buck converter coupled to an unfolding bridge.

FIG. 7 is a representative plot of power versus time for an example PV panel.

FIG. 8 is a flow diagram illustrating an example power smoothing method.

FIG. 9 is a flow diagram of an example SoC maintenance method.

FIG. 10 is a control flow diagram of an example combined power smoothing and SoC management control loop.

## Detailed Description

Power generation from renewable sources is becoming increasingly important. The power output from renewable generators, such as for example solar Photo-Voltaic (PV) generation, wind turbines or tidal power generators can be intermittent and dependent on prevailing weather conditions such as amount of cloud cover or wind speed. The output of renewable generators could be stabilized by the addition of energy storage.

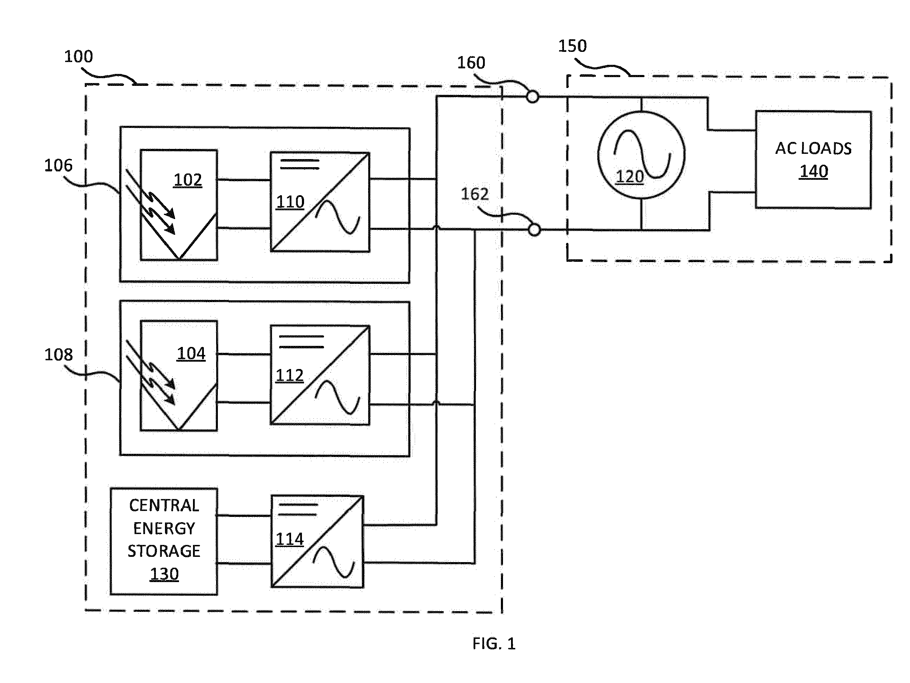

FIG. 1 is a block diagram of a conventionally stabilized power generation system.

Power system 100 comprises PV generators 106, 108, bi-directional inverter 114, central energy storage 130 and terminal pair 160, 162. PV power system 100 connects to Alternating Current (AC) grid 150 at terminal pair 160, 162. PV generator 106 comprises PV panel 102 and inverter 110. PV generator 108 comprises PV panel 104 and inverter 112.

PV panels 102, 104 provide Direct Current (DC) power to inverters 110, 112 respectively. Inverters 110, 112 are uni-directional and provide AC power to AC grid 150.

AC grid 150 comprises AC loads 140 and AC generator 120. AC generator 120 could be a non-renewable generator, for example a diesel generator, and provide power for night time operation. AC loads 140 could comprise lighting, heating, cooling, electric motors or industrial machinery. AC grid 150 could be a microgrid such as a remote mining facility, military forward operating base or a university campus. AC grid 150 could also be a utility grid.

Central energy storage 130 connects to bidirectional inverter 114. Bi-directional inverter 114 couples to AC grid 150 through terminal pair 160, 162. When there is an excess of power on AC grid 150, from excess power generation from PV panels 102, 104 for example, central energy storage 130 could absorb the excess power and store energy. When there is a deficiency of power on the AC grid 150, from reduced power generation from PV panels 102, 104 for example, central energy storage 130 could provide power to AC grid 150. The action of central energy storage 130 reduces the required variation in power output from AC generator 120 caused by the variability in output of PV panels 102, 104. In the case of AC generator 120 being a diesel generator, this could beneficially improve its fuel efficiency. Central energy storage 130 does not reduce the variation in power output of PV generators 106, 108 but merely compensates for their variation.

As described in detail herein, output power stabilization could be achieved with an energy store such as a battery or a capacitance (illustratively an ultracapacitor). A PV panel, and/or other power generating component, could connect to the energy store through a DC / DC converter and to an electrical grid or microgrid through a DC / AC converter, also referred to as an inverter. In an embodiment, expected power output for the PV panel is determined, based on time of day for instance, and compared to the actual power being produced. Any difference is either sourced or sunk by the energy store. Short term output fluctuations could be smoothed out in this manner.

In an embodiment, a dual-active-bridge based bi-directional micro-inverter with integrated short-term Li-ion ultra-capacitor storage and active power smoothing for modular PV systems is provided.

These and other embodiments are described in further detail herein.

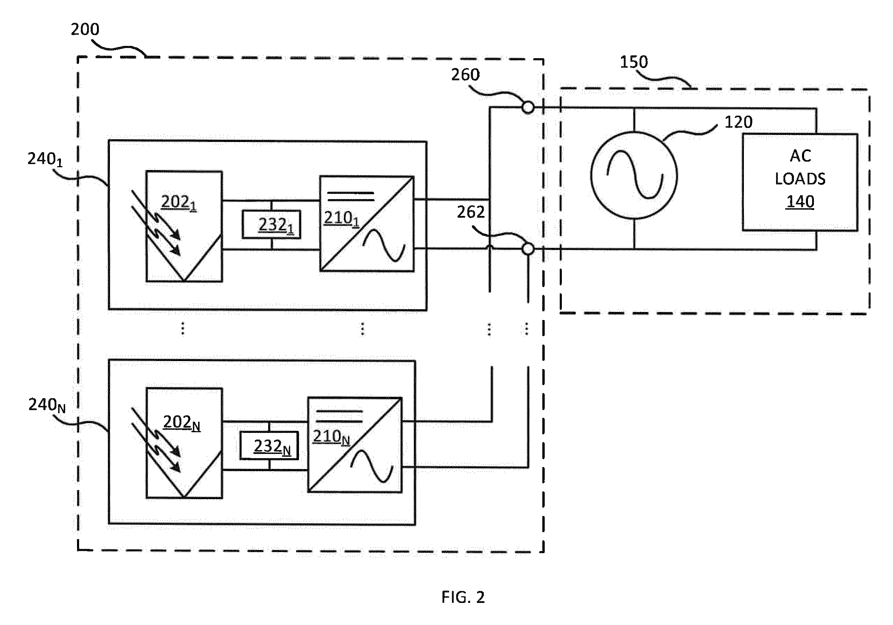

FIG. 2 is a block diagram of an example stabilized PV power system using integrated energy storage. PV power system 200 comprises PV generators $240_1$ ... $240_N$ and terminal pair 260, 262, which could be discrete terminals or simply connections. PV generator $240_1$ comprises PV panel $202_1$, inverter $210_1$ and distributed energy storage $232_1$. PV generator $240_N$ comprises PV panel $202_N$, inverter $210_N$ and distributed energy storage $232_N$. PV power system 200 connects to AC grid 150.

Inverters $210_1$ ... $210_N$ are bi-directional and convert the DC power of PV panels $202_1$... $202_N$ into AC power. Inverters $210_1$ ... $210_N$ can also convert AC power from AC grid 150 into DC power to charge distributed storage $232_1$ ... $232_N$. Thus, although referred to as inverters, the inverters $210_1$ ... $210_N$ and inverters in other example embodiments herein are not limited to inverting DC power to AC power. The inverters can also perform AC to DC conversion, and therefore could be considered a form of DC / AC converter. Inverters $210_1$ ... $210_N$ could also be capable of four quadrant operation and provide reactive as well as real power. Inverters $210_1$ ... $210_N$ could also be capable of stand-alone operation with distributed frequency and voltage regulation such that the frequency and voltage of AC grid 150 is maintained even if generator 120 were to cease power generation, from running out of fuel or experiencing mechanical breakdown for example. Any of various types of inverters could be used to implement inverters $210_1$ ... $210_N$, and illustrative examples are provided herein.

Distributed energy storage $232_1$ ... $232_N$ provide power smoothing and stabilization of the power output of individual PV generators $240_1$ ... $240_N$ and PV power system 200 and reduces the variation in power output from AC generator 120 that would otherwise be required. Distributed energy storage $232_1$ ... $232_N$ could employ any of a variety of storage technologies including one or more batteries and / or one or more ultracapacitors. Although not explicitly shown in FIG. 2, DC/DC conversion is provided within distributed energy storage $232_1$ ... $232_N$ in the embodiment shown. Thus, each distributed energy storage $232_1$ ... $232_N$ includes a DC/DC converter and an energy store.

Power system 200 using distributed storage in the form of energy storage $232_1$ ... $232_N$ could have an advantage over power system 100 (FIG. 1). Power system 200 is modular. Generating capacity can be added to power system 200 in increments as small as a single additional PV generator. In contrast, the addition of more generating capacity to power system 100 could require the replacement of inverter 114 and/or central energy store 130 with larger capacity units. Power system 200 could be more efficient than power system 100. To store power in energy store 130, PV panel power must first be converted from DC power to AC power by one of inverters 110, 112 and then converted back to DC power by inverter 114. In contrast, to store power in distributed energy storage $232_1$ ... $232_N$, PV power need only be converted once from the DC level of PV panel $202_1$ ... $202_N$ to the DC level of distributed energy storage $232_1$ ... $232_N$.

Central energy storage 130 could comprise a large number of individual storage cells such as batteries. Complicated and inefficient cell balancing could be required to ensure that individual cells are not under or over-charged. Cell balancing in distributed storage $232_1$ ... $232_N$ might not be required due to its smaller number of cells or the complexity of cell balancing could be greatly reduced. For example, in one embodiment, each of the distributed energy storage $232_1$ ... $232_N$ comprises only two individual serially connected storage cells.

Power system 200 could also provide a more stable Root-Mean-Square (RMS) voltage for AC grid 150 than power system 100 (FIG. 1). For example, a reduction in the power generation of PV panel 102 or 104 and a consequent requirement for central energy storage 130 to source power can only be signaled to central energy storage 130 by a decrease in the RMS voltage of AC grid 150. In power system 200 a reduction in power generation of PV panel $202_1$ ... $202_N$ can be signaled to distributed energy storage $232_1$ ... $232_N$ without a decrease in the voltage of AC grid 150 since each of PV panel $202_1$ ... $202_N$ is directly connected to each of distributed energy storage $232_1$ ... $232_N$.

Power system 200 could also be more fault tolerant than power system 100 (FIG. 1). For example, central energy storage 130 and inverter 114 represent single points of failure and could compromise the ability of power system 100 to compensate for fluctuation in the output of PV generators 106, 108. Storage in power system 200 however, is distributed across all PV generators $240_1$ ... $240_N$ and there is no single point of failure.

Power system 200 is an example only. In other embodiments a PV panel generator could comprise multiple, serially connected PV panels rather than a single panel. Although power system 200 is depicted as a single-phase system, in other embodiments it could be multi-phase. Other power generating components could be used instead of or in addition to PV panels, including wind turbines, tidal turbines and/or other renewable generators.

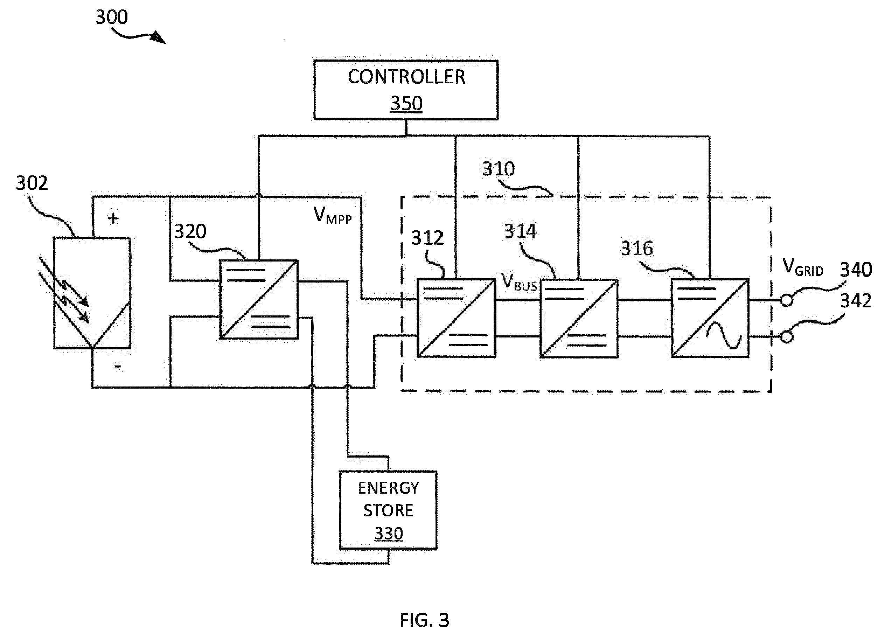

FIG. 3 is a block diagram of an example PV generator such as PV generator $240_1$ ... $240_N$ of power system 200 of FIG.2. PV generator 300 comprises PV panel 302, bi-directional inverter 310, bi-directional storage DC/DC converter 320, energy storage 330 and controller 350. The terminals shown at 340, 342 could be discrete terminals or simply connections to an AC grid such as AC grid 150 (FIG. 2).

The output power and voltage of PV panel 302 is variable and dependent on the level of insolation it receives. Storage DC/DC converter 320 and energy store 330 stabilize the output of PV generator 300. When there is an excess of PV panel power, DC/ DC converter 320 converts the excess power and stores it in energy store 330. When there is a deficiency of PV panel power, DC/ DC converter 320 takes power from energy store 330 and provides it to inverter 310.

Energy store 330 could include capacitance, and could stabilize the output of PV generator 302 in the short term (minutes) to smooth its power output. It could also support the voltage $V_{GRID}$ of AC grid 150 (FIG. 2) in the short term to mitigate transient loads such as the start up of a motor. In one embodiment energy store 330 is a Lithium-Ion Ultra-Capacitor (LIC).

Ultracapacitors have a symmetric input and output specific power in the range of 0.5-25 kW/kg, which is at least one order of magnitude higher than typical lithium-ion (Li-Ion) based batteries. Ultracapacitors also offer higher cycle-life, lower Equivalent Series Resistance (ESR) and less susceptibility to high depths-of-discharge. A LIC is a hybrid device that combines the intercalation mechanism of traditional Lithium-Ion batteries with the cathode of an ultracapacitor. The cathode often employs activated carbon material at which charges are stored at the interface between the carbon and the electrolyte. The anode is generally pre-doped with Lithium ions, resulting in a lower anode voltage, and a higher cell voltage. As a consequence, LICs have 3-4x higher energy density than ultracapacitors. LICs are well suited to applications where both high energy, high power and high cycle-life are required. LIC technology matches with the 20-25 year expected lifespan of PV systems. To deal with power fluctuations of a PV system, relatively high energy-density is necessary, since irradiance fluctuations occur in the timescales of minutes. In one embodiment energy store 330 comprises two serial connected LICs each of capacitance of 2,200 F and with a total storage capacity of 8.8 Watt-hours.

Energy store 330 could also or instead include a battery and stabilize the output of PV generator 302 and support the voltage $V_{GRID}$ of AC grid 150 (FIG. 2) for longer periods.

Storage DC/DC converter 320 can also convert power from inverter 310 and supply it to energy store 330 to maintain the State of Charge (SoC) of energy store 330 at a target level. The SoC of an energy storage device is the amount of energy stored divided by the energy storage capacity of the device and is normally expressed as a percentage. For example a fully charged device would have an SoC of 100%.

In one embodiment, storage DC/DC converter 320 regulates the output voltage of PV panel 302 to a reference voltage $V_{MPP}$. $V_{MPP}$ corresponds to the Maximum Power Point of the PV panel and represents the point on the PV panel's current versus voltage curve corresponding to maximum output power. $V_{MPP}$ varies with the amount of insolation the PV panel receives. In one embodiment, PV panel 302 is a 100W panel, $V_{MPP}$ is 10 V and the current at the maximum power point ($I_{MPP}$) is 10 A.

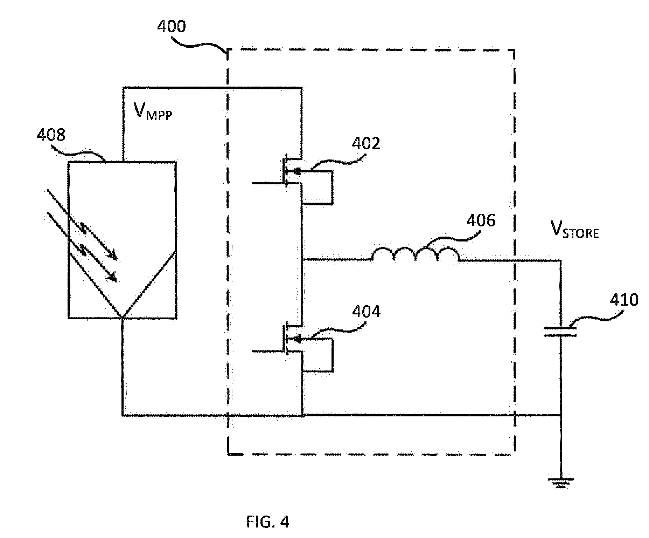

Storage DC/DC converter 320 could be a synchronous half bridge. FIG. 4 is a schematic diagram of an example synchronous half bridge DC/DC converter connected to a PV panel and capacitance. Synchronous half bridge 400 comprises N channel MOSFETs 402, 404 and inductance 406. Although not explicitly shown in FIG. 4, the gates of MOSFETS 402, 404 are coupled to receive control signals, from the controller 350 (FIG. 3), for example.

Synchronous half bridge 400 is bi-directional and couples power between PV panel 408 at a voltage of $V_{MPP}$ and capacitance 410 at a voltage of $V_{STORE}$. N channel MOSFETs 402, 404 are switched with a period "T" and controlled in a complementary fashion. When one of 402, 404 is conducting (ON) the other of 402, 404 is non-conducting (OFF). In one embodiment, inductor 406 has a value of $L_{LIC} = 10\,\mu H$. The voltage of PV panel 408 could be regulated to $V_{MPP}$ by controlling the duty cycle of storage DC/DC converter 400.

The duty cycle "D" of storage DC/DC converter 400 is defined as the ratio of the ON time of switch 402 to the switching period T and is normally expressed as a percentage. The duty cycle may range from 0 to 100%. For example, if switch 402 is ON for 70% of the switching period then the duty cycle is 70%. The relationship of converter 400's output voltage $V_{STORE}$ to its input voltage $V_{MPP}$ depends on its duty cycle D and is given by the equation.

$$V_{STORE} = DV_{MPP}$$

In one embodiment $V_{MPP}$ is 10 V and the voltage at capacitance 410 varies from 4.4 V to 7.6 V. The duty cycle of MOSFETs 402, 404 could be determined by a Maximum Power Point Tracking controller which is not shown in FIG. 4. Maximum Power Point Tracking could be implemented in the same controller that controls switching of the MOSFETs 402, 404, such as the controller 350 (FIG. 3), or separately.

Referring to FIG. 3, inverter 310 is bi-directional and can convert the DC power of PV panel 302 to AC power for AC grid 150. Inverter 310 can also convert AC power from AC grid 150 to DC power to supply energy store 330 with power through storage DC/DC converter 320 and maintain a target level SoC level of energy store 330.

Inverter 310 in FIG. 3, comprises first DC/DC stage 312, second DC/DC stage 314 and DC/AC stage 316. First DC/DC stage 312 converts the power of PV panel 302 at $V_{MPP}$ (which could vary with insolation levels) to power at substantially constant DC bus voltage ($V_{BUS}$). First DC/DC stage 312 is bi-directional and can also perform the reverse operation.

In an embodiment the current drawn or supplied by energy store 330 is regulated by first DC/DC stage 312. To maintain stability the time constant of the storage current regulation running in DC/DC converter 312 could be made much longer than the time constant of the PV panel output voltage regulation controlling the duty cycle of storage DC/DC converter 320 .

In one embodiment first DC/DC stage 312 is an isolated Dual Active Bridge (DAB) circuit.

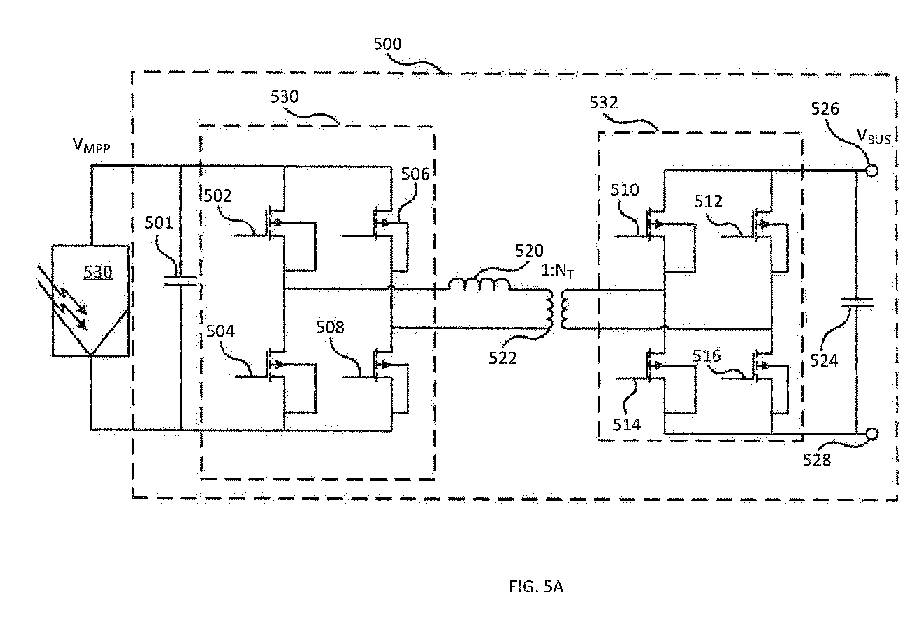

FIG. 5A is a schematic diagram of an example isolated Dual Active Bridge (DAB). DAB 500 comprises input capacitance 501, N type MOSFETs 502, 504, 506, 508, 510, 512, 514, 516, inductance 520 of size or value "L", transformer 522 of turns ratio of $1:N_T$ and leakage inductance 520 of size $L_{LEAK}$, output capacitance 524 and terminal pair 526, 528 which could be discrete terminals or simply connections. DAB 500 is bi-directional and couples power between PV panel 530 and terminal pair 526, 528. MOSFETS 502, 504, 506, 508 comprise a first bridge 530 and MOSFETs 510, 512, 514, 516 comprise a second bridge 532. Bridges 530 and 532 couple together through inductance 520 and transformer 522.

Although not explicitly shown in FIG. 5A, the gates of MOSFETS 502, 504, 506, 508, 510, 512, 514, 516 are coupled to receive control signals, from the controller 350 (FIG. 3), for example.

MOSFET pair 502, 508 and MOSFET pair 504, 506 in bridge 530 are controlled in a complementary fashion. When MOSFET pair 502, 508 are ON and conducting MOSFET pair 504, 506 are OFF and non-conducting, and when MOSFET pair 502, 508 are OFF and non-conducting MOSFET pair 504, 506 are ON and conducting. MOSFET pair 502, 508 and MOSFET pair 504, 506 are switched at a frequency of $f_s$.

MOSFET pair 510, 516 and MOSFET pair 512, 514 in bridge 532 are also operated in a complementary fashion. When MOSFET pair 510, 516 are ON and conducting MOSFET pair 512, 514 are OFF and non-conducting, and when MOSFET pair 510, 516 are OFF and non-conducting MOSFET pair 512, 514 are ON and conducting. MOSFET pair 502, 508 and MOSFET pair 504, 506 are switched at the same frequency of $f_s$ as MOSFET pairs 502, 508 and 504, 506.

In one embodiment of DAB 500 the $f_s$ is 156 kHz, the turns ratio of transformer 522 is 10, the output capacitance 524 has a value of 270 uF, the input capacitance 501 has a value of 1 mF, the inductance 520 has a value of 4.7 $\mu$H and $V_{BUS}$ = 420 V.

The DAB topology could be operated in soft-switching operation and use phase-shifting between the switching of bridge 530 and bridge 532 to achieve power control. The real power flow (P) in DAB 500 from PV panel 530 to output terminal pair 526, 528 is given by the equation:

$$P = \frac{V_{MPP} V_{BUS}}{2 \pi f_S N_T L_{TOT}} \, \Phi \left\{ 1 - \frac{\Phi}{\pi} \right\}$$

where $-\pi/2 < \Phi < \pi/2$ where $L_{TOT} = L + L_{LEAK}$ is the value of total inductance, and $\Phi$ is the phase-shift between the switching of first bridge 530 and second bridge 532. No power is transferred when $\Phi = 0$. A maximum amount of power is transferred from PV panel 530 to terminal pair 526, 528 when $\Phi = \pi/2$. A maximum amount of power is transferred in the reverse direction when $\Phi = -\pi/2$. Referring to FIGS. 3 and 5A, DAB 500 could be used as the DC/DC converter 312 in inverter 310. The current drawn by energy store 330 could be regulated by controlling the phase delay $\Phi$ between the switching of first bridge 530 and second bridge 532. For example, to increase the current sourced from or decrease the current drawn by energy store 330, the current drawn by DAB 500 could be increased by increasing $\Phi$. To decrease the current sourced from or increase the current drawn by energy store 330, the current drawn by DAB 500 could be decreased by decreasing $\Phi$.

To maintain stability the time constant of the storage current regulation controlling the phase of DAB 500 could be made much longer than the time constant of the PV panel output voltage regulation controlling the duty cycle of storage DC/DC converter 320.

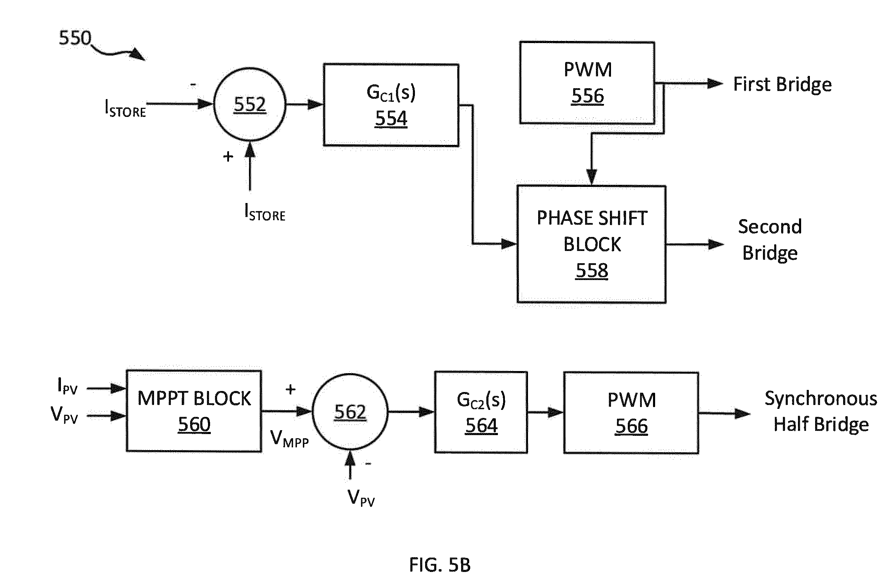

FIG 5B is an example control flow diagram, for the control of storage DC/DC converter 400 (FIG. 4) and DAB 500 (FIG. 5A). Measurements of panel voltage ($V_{PV}$) and current ($I_{PV}$) are received by an MPP Tracking (MPPT) control block 560 which generates an MPP voltage $V_{MPP}$. The difference between $V_{MPP}$ and $V_{PV}$ is calculated at 562 and transformed by the MPP transfer function $G_{C2}(s)$ at block 564. The MPP transfer function $G_{C2}(s)$ is a function in the Laplace transform variable "s" and could represent an integration, a differentiation and/or a scaling of the input signal. The transformed difference is input to Pulse Width Modulator block 566 which generates timing control signals for synchronous half bridge 400 (FIG. 4). The MPP transfer function could also be implemented in continuous or discrete time.

Pulse Width Modulator block 556 generates timing control signals for first bridge 530 of DAB 500 (FIG. 5A). The difference between a storage current reference $I_{STORE, REF}$ and the storage current $I_{STORE}$ is calculated at 552 and transformed by the current control loop transfer function $G_{C1}(s)$ at 554. The loop transfer function $G_{C1}(s)$ is a function in the Laplace transform variable "s" and could represent an integration, a differentiation and/or a scaling of the input signal. The transformed difference is input to phase shift block 558 which generates phase shifted version of the timing signals of first bridge 530 for second bridge 532 (FIG 5A). The loop transfer function could also be implemented in continuous or discrete time.

Second DC/DC stage 314 (FIG. 3) could regulate the value of $V_{BUS}$ to a DC voltage somewhat higher than the peak ($V_{PEAK}$) of the AC voltage ($V_{GRID}$) to which inverter 310 connects (AC grid 150 of FIG.2 for example) by sinking or sourcing current. In one embodiment $V_{BUS}$ is regulated to be 20% higher than $V_{PEAK}$. $V_{PEAK}$ is equal to $\sqrt{2} V_{GRID}$ where $V_{GRID}$ is the RMS (Root Mean Square) voltage of the AC grid voltage. In one embodiment $V_{GRID}$ is 240 Volts. Second DC/DC stage 314 (FIG. 3) is bi-directional and couples power between first DC/DC stage 312 and DC/AC stage 316. Second stage DC/DC converter 314 could be a synchronous buck converter, for example.

DC/AC stage 316 converts DC power to AC power at the voltage of the AC grid it is connected to (for example AC grid 150 of FIG. 2). DC/AC stage 316 is bi-directional and can also perform the reverse operation. DC/AC stage 316 could be an unfolding bridge, for example.

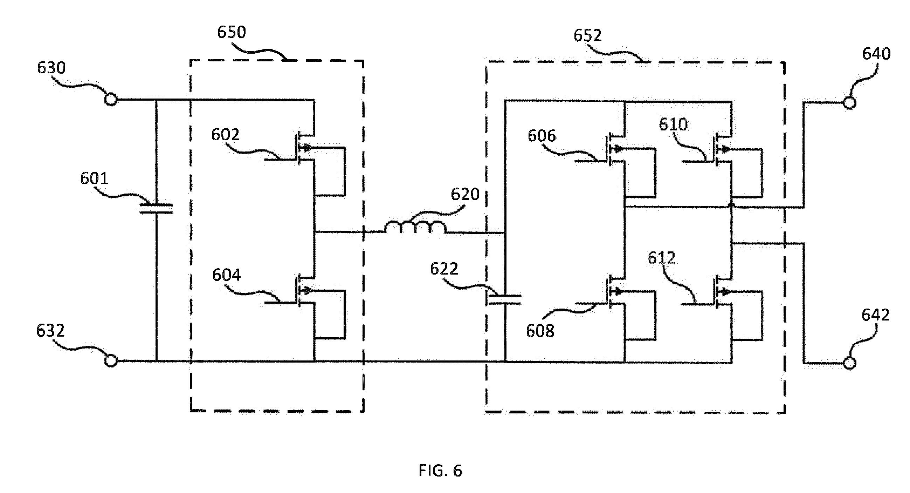

FIG. 6 is a schematic diagram of an example synchronous buck converter coupled to an unfolding bridge. Synchronous buck converter 650 comprises MOSFETS 602, 604, input capacitance 601, buck inductance 620 of value $L_{BUCK}$ and buck capacitance 622. Unfolding bridge 652 comprises MOSFETS 606, 608, 610 and 612. Synchronous buck 650 converter and unfolding bridge 652 are bi-directional and can couple power between terminal pair 630, 632 and terminal pair 640, 642. Terminal pair 640, 642 could connect to an AC grid such as for example, AC grid 150 of FIG. 2. Terminal pairs 630, 632 and 640, 642 need not necessarily be discrete terminals, and could instead simply be connections to other components.

In one embodiment the inductance 620 has a value of 500 $\mu$H.

Although not explicitly shown in FIG. 6, the gates of MOSFETS 602, 604, 606, 608, 610, 612 are coupled to receive control signals, from the controller 350 (FIG. 3), for example. Referring to FIGS. 3 and 6, synchronous buck converter 650 and unfolding bridge 652 could be used to implement second DC/DC stage 314 and DC/AC stage 316, respectively.

Synchronous buck converter 650 could regulate the DC link voltage $V_{BUS}$ by controlling the amount of current sunk into or sourced from input capacitance 601. It could also shape the current through buck inductance 620 to be a rectified sinusoid. The rectified sinusoid could be at twice the frequency of and in phase with the AC voltage at terminal pair 640, 642 to achieve a high power factor. Synchronous buck converter 650 could be operated in boundary conduction mode for soft-switching and high-efficiency.

The on-time, $T_{ON}$, of high-side MOSFET 602 in positive, real power flow operation to produce the change in current through buck inductance 620 that produces a rectified half sinusoid can be calculated using the equation:

$$T_{ON} = L_{BUCK} \frac{\Delta I}{V_{BUS} - V_{PEAK}}$$

where $\Delta I$ is the current change.

Similarly, the on-time, $T_{ON}$, of MOSFET 604 in negative, real power flow operation can be derived from the same equation.

The $T_{ON}$ values for the half sinusoid could be pre-calculated and stored in a Lookup Table (LUT). The LUT could be stored in a memory accessible by a controller, such as controller 350 in FIG. 3, that controls switching of the synchronous buck converter MOSFETs 602, 604.

Unfolding bridge 652 could "unfold" the rectified sinusoid generated by synchronous buck converter 650 to produce a full sinusoid in phase with and at the frequency of the AC voltage at terminal pair 640, 642.

MOSFET pair 606, 612 and MOSFET pair 610, 608 in unfolding bridge 652 are controlled in a complementary fashion. When MOSFET pair 606, 612 are ON and conducting MOSFET pair 610, 608 are OFF and non-conducting, and when MOSFET pair 606, 612 are OFF and non-conducting MOSFET pair 610, 608 are ON and conducting. MOSFET pair 606, 612 and MOSFET pair 610, 608 are switched at a frequency of twice the frequency of the AC voltage at terminal pair 640, 642. MOSFETs 606, 608, 610, 612 could be soft-switched to minimize losses.

Controller 350 (FIG. 3) controls the operation of storage DC/DC converter 320 and bi-directional inverter 310 including first DC/DC stage 312, second DC/DC stage 314 and DC/AC stage 316. Although depicted as a single control block, controller 350 could comprise multiple control modules or controllers which control different components or functions. Controller 350 could control switch timings such as for example any one or more of: the duty factor and/or timing of MOSFETs 402, 404 in synchronous half bridge 400 (FIG. 4); the relative phase difference between first bridge 530 and second bridge 532 of DAB 500 (FIG. 5A) and/or the timing of MOSFETs 502, 504, 506, 508, 510, 512, 514, 516; the ON time of MOSFETs 602, 604 of synchronous buck converter 650 (FIG. 6); and/or the timing of MOSFETs 606, 608, 610, 612 of unfolding bridge 652. Controller 350 could contain one or more measurement modules or means, such as one or more voltmeters and/or one or more ammeters, for monitoring parameters such as any one or more of: the current and/or voltage of PV panel 302; the voltage of energy store 330; the current and/or voltage at one or both sides of DC/DC converter 320; the input current of first DC stage 312; and/or the grid voltage at terminal pair 340, 342. Controller 350 could store various values and parameters such as for example any one or more of: the $T_{ON}$ values for the half sinusoid produced by synchronous buck converter 650; and/or a target SoC value for storage 330.

Controller 350 could execute various control methods such as for example any one or more of: an MPPT control method for PV panel 302; a power smoothing method for the output of PV power generator 300; and/or an SoC maintenance method for storage 330.

Controller 350 could comprise a processor or multiple processors for the calculation of various values and execution of algorithms, volatile and/or non-volatile memory for the storage of control software / firmware, parameters, values and/or measurements. Controller 350 could also comprise measurement modules or means such as, for example, one or more analog to digital converters for the measurement of voltages and/or currents. In one embodiment controller 350 comprises a Field Programmable Gate Array (FPGA) to control first DC/DC stage 312 and a 16-bit microcontroller to control second DC/DC stage 314 and DC/AC stage 316.

In one embodiment controller 350, DC/DC converter 320, inverter 310 and energy store 330 are contained within a single physical enclosure and attached to PV module 302. This embodiment could provide improved modularity and reduced installation costs compared to the power system of FIG. 1.

*Power Smoothing*

Referring to FIG. 2, distributed energy storage $232_1$ ... $232_N$ could be used to smooth and reduce the short term variation in the output power of PV generators $240_1$ ... $240_N$, from fluctuations in their insolation for example. This could reduce the stress on AC generator 120 by reducing the required compensating change in its power output. If AC generator 120 were a diesel generator for example, its lifetime could be extended and its fuel economy improved by allowing it to operate with less variation in its output. In addition, the frequency regulation of AC grid 150 could be improved by reducing the disturbance on the droop control of AC generator 120.

In an embodiment, the power fluctuation of an individual PV generator $240_1$ ... $240_N$ is stabilized by a forecasting mechanism that runs in real-time and outputs a current reference to regulate the PV generator's power output to an expected value. The expected value could be calculated based on a time series of average power output values, and the average values could be calculated over a smoothing period. In this embodiment the expected value is predominantly determined by fluctuations in insolation that occur on a time scale of the same order as the smoothing period. The expected value is only slightly or not at all affected by fluctuations that occur on a time scale much shorter than the smoothing period.

For example, if the smoothing period is five minutes then fluctuations in insolation that occur from rapid (a few tens of seconds, for example) cloud movements will not affect the expected value and these changes will be compensated for. Insolation fluctuations from the gradual (five minutes or more, for example) darkening of the sky will affect the expected value and will not be compensated for.

The length of the smoothing period could be determined by the amount of storage. Since the storage must compensate for the difference between actual and expected power output over the smoothing period longer smoothing periods could involve providing larger amounts of storage.

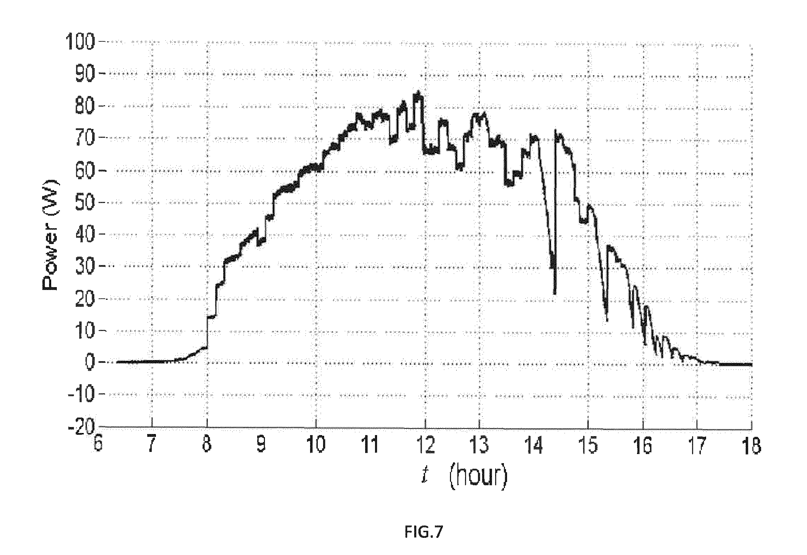

FIG. 7 is a representative plot of power versus time for an example 100 W PV panel on a cloudy day with surrounding shadowing obstacles. Similar or different results could be obtained under similar or different conditions using a similar or different PV panel.

Power is almost zero in the morning before about 8:00, increases to maximum of around 90W at around 12:00 and then decreases back to almost zero after 18:00. Significant (> 50%) and short term (minutes) variation in power is evident at, for example around 14:00 and 15:00. These types of variation could be especially difficult and expensive for an AC grid to accommodate since many types of conventional generation sources cannot respond on these time scales and the price of reserve generating capacity is typically inversely proportional to the required response time.

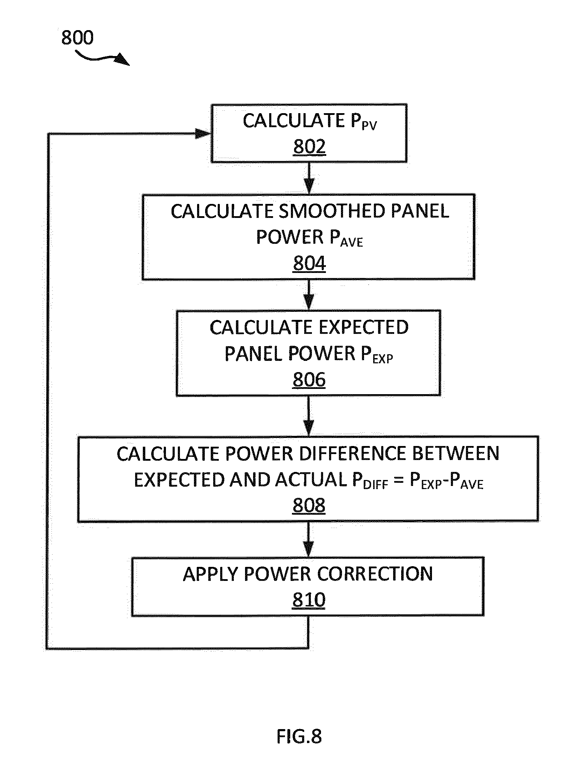

FIG. 8 is a flow diagram illustrating an example power smoothing method 800, for a stabilized power generator such as PV generators $240_1$ .... $240_N$ of FIG. 2 or PV generator 300 of FIG. 3. At 802 the current panel power ($P_{PV}$) is calculated, from measurements of the PV panel voltage and current, for example,. At 804 a smoothed value of panel power ($P_{AVE}$) is calculated. In one embodiment $P_{AVE}$ is a time average and is calculated using a weighted moving averaging window. The size of this window could be scaled based on the storage capacity of the energy store and the desired level of power smoothing. In one embodiment $P_{PV}$ is calculated every 10 seconds and $P_{AVE}$ is calculated using a five minute wide window. In one embodiment a Hull Moving Average is used. A Hull moving average can be calculated using the formula

$$HMA = WMA\left(2 * WMA\left(P_{PV}, {}^{M}\!/_{2}\right) - WMA(P_{PV}, M), \sqrt{M}\right)$$

where $WMA(f(x),M)$
is a weighted moving average of the function f(x) calculated over the last M values. A Hull moving average could reduce the latency in the value of $P_{AVE}$ relative to a value of $P_{AVE}$ calculated using a simple Weighted Moving Average, while still providing smoothing.

In one embodiment M has the value of 30. In one embodiment linear weights are used with the most recent value given the highest weight. For example, in one embodiment there are 30 values and the most recent value is given a weight of 30, the previous sample is given a weight of 29 and so on. At 806 an expected value of panel power $P_{EXP}$ is calculated based on previous values of $P_{AVE}$.

In one embodiment, the expected value of panel power is calculated using a polynomial $s(n, \theta)$ fitted to previously measured values of $P_{AVE}$ where $\theta$ is a vector representing the polynomial coefficients and "n" is the measurement index. In this embodiment a Least Square Estimation (LSE) method is used to find $\hat{\theta}$, the value of $\theta$ which best fits the curve of previous $P_{AVE}$ values using the formula:

$$\hat{\theta} = \arg\min_{\theta} \sum_{n=1}^{N} \left( P_{AVE}(n) - s(n,\theta) \right)^2$$

where arg min is a minimization function in $\theta$.

This equation is formed at each sample-time $N$ and $s(n, \theta)$ is updated. By evaluating $s(N+1, \theta)$, the expected value of $P_{AVE}$ is estimated.

At 808 the power difference $P_{DIFF}$ between the expected value and the measured value of panel power is calculated.

At 810 a power correction is applied to change the power generator's output by the amount $P_{DIFF}$. The power generator will attempt to provide the power difference using the power generator's distributed storage such as for example distributed energy storage $232_1$ ... $232_N$ of FIG. 2. If $P_{DIFF}$ is a positive value the distributed storage will source power. If $P_{DIFF}$ is a negative value then the distributed storage will store power. For example, referring to FIG. 3, in one embodiment a current reference signal could be supplied to first DC/DC stage 312 of inverter 310 to control its current. In this embodiment the power correction could be a change in this current reference signal which would cause a change in the current drawn by first DC/DC stage 312 and a complementary change in the current of DC/DC converter 320. For example, if the current drawn by first DC/DC stage 312 increases then the current sourced by energy store 330 and DC/DC storage converter 320 will also increase. If the current drawn by first DC/DC stage 312 decreases then the current sourced by energy store 330 and DC/DC storage converter 320 will decrease and could be negative in which case energy store 330 would sink current and store energy.

*SoC* Maintenance

It could be desirable to maintain the State-of-Charge (SoC) of a stabilized power generator's energy store at a target value. This could improve the ability of the energy store to respond to power fluctuations. In one embodiment the target value is 50% of SoC and the power generator is controlled to attempt to maintain the SoC of the energy store at 50%. This SoC control method could operate in conjunction with the power smoothing method but on a longer time scale to prevent instability.

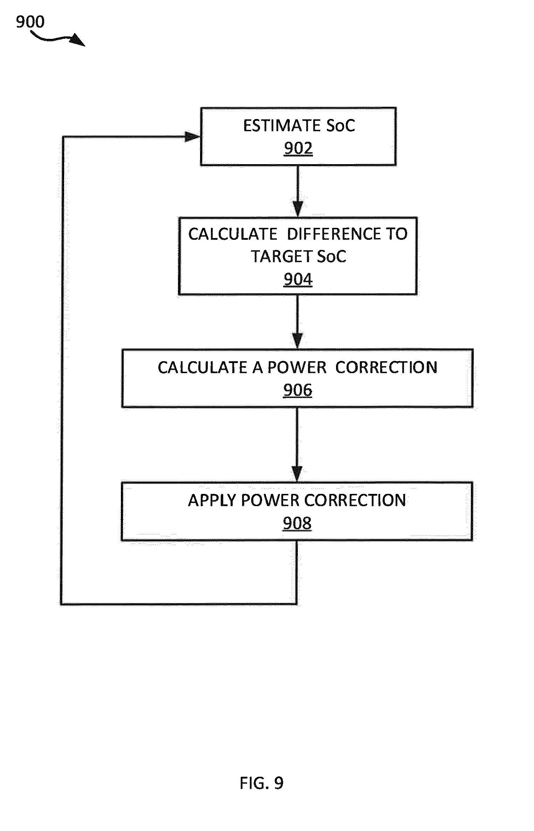

FIG. 9 is a flow diagram of an example SoC maintenance method 900. At 902 the SoC of the power generator's energy store is estimated. For embodiments where the energy store is a capacitance of value $C_{STORE}$ the SoC of the capacitance could be estimated according to the well-known formula for energy stored in a capacitance

$$E = \frac{1}{2} C_{STORE} V_{STORE}^2$$

where $V_{STORE}$ is the voltage of the capacitance.

At 904 the difference between the target and estimated SoC values is calculated. At 906 a power correction is calculated based on the difference. At 908 the correction is applied. For example, referring to FIG. 3, in one embodiment a current reference signal is supplied to first DC/DC stage 312 of inverter 310 to control its current.

In this embodiment the power correction could be a change in this current reference signal which would cause a change in the current drawn by first DC/DC stage 312 and a complementary change in the current of DC/DC converter 320. For example, if the current drawn by first DC/DC stage 312 increases then the current sourced by energy store 330 and DC/DC storage converter 320 will also increase and the SoC of energy store 330 will decrease. If the current drawn by first DC/DC stage 312 decreases then the current sourced by energy store 330 and DC/DC storage converter 320 will decrease and could be negative in which case the SoC of energy store 330 would increase.

It could be desirable to dynamically adjust the target SoC of the energy store throughout the day.

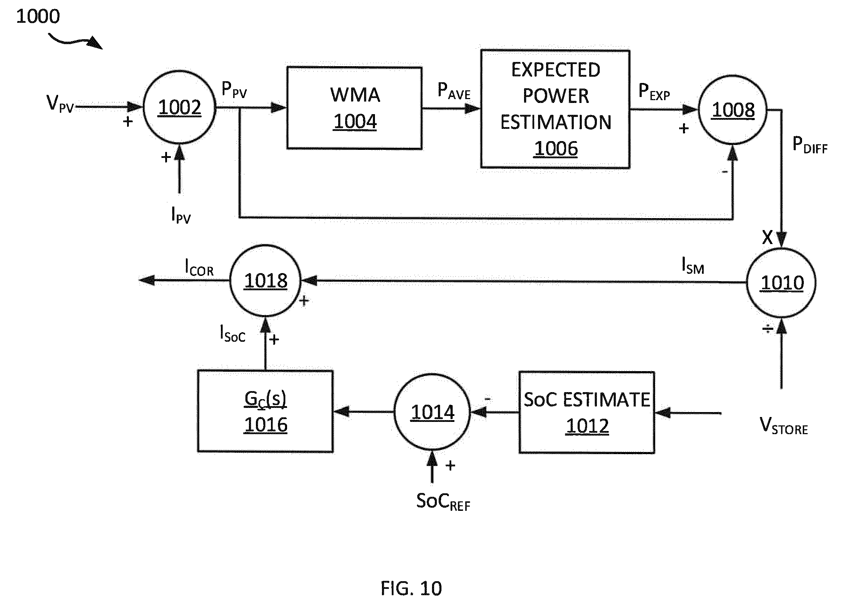

FIG. 10 is a control flow diagram of a combined power smoothing and SoC management control loop 1000 for PV generator 300. At 1002 the PV panel power $P_{PV}$ is calculated from measurements of the PV panel voltage ($V_{PV}$) and current ($I_{PV}$). At 1004 the moving average of the PV panel power ($P_{AVE}$) is calculated. At 1006 an expected value of PV panel power ($P_{EXP}$) is estimated based on previous values of $P_{AVE}$. At 1008 a power difference $P_{DIFF}$ is calculated between the expected PV panel power and the actual PV panel power. At 1010 a power smoothing current correction ($I_{SM}$) is calculated by dividing $P_{DIFF}$ by the storage voltage $V_{STORE}$. At 1012 an estimate of SoC is calculated based on the value of $V_{STORE}$. At 1014 the difference between the target SoC value ($SoC_{REF}$) and the SoC estimate is calculated. At 1016 an SOC current correction $I_{SoC}$ is generated using the difference between the SoC target and estimated values and the SoC control loop transfer function $G_c(s)$. The SoC transfer function is a function in the Laplace transform variable "s" and could represent an integration, a differentiation and/or a scaling of the input signal. The MPP transfer function could also be implemented in continuous or discrete time. The transfer function could be designed to provide the SoC control loop a slower response time than the power smoothing loop.

At 1018 the power smoothing current and SoC current corrections are summed and a total current correction $I_{COR}$ calculated. The total current correction could be applied to the first DC/DC stage 312 PV generator 300, for example.

*Overview*

Various embodiments are described above, with reference to the drawings. According to the present disclosure, any of several techniques could be used to stabilize power generation. A stabilized power generator includes a power generating component. For example, the power generating component could be a PV panel or there could be multiple PV panels. This type of power generating component is shown at $202_1$ ... $202_N$ in FIG. 2, 302 in FIG. 3, 408 in FIG. 4, and 530 in FIG. 5A. Other types of power generating components, such as wind turbines and tidal power generators, are also contemplated.

An energy store is also provided in a stabilized power generator, as shown at 330 in FIG. 3. The energy store could include, for example, capacitance, a battery, and/or an ultracapacitor.

A bi-directional DC/DC converter is electrically coupled between the power generating component and the energy store. This is shown, for example, at 320 in FIG. 3. Such a converter could be implemented together with the energy store, in distributed storage $232_1$ ... $232_N$ (FIG. 2).

In a stabilized power generator, a bi-directional DC/AC converter is electrically coupled at a DC side of the bi-directional DC/AC converter to a circuit path between the power generating component and the bi-directional DC/DC converter, and is to be electrically coupled at an AC side of the bi-directional DC/AC converter to an electrical grid. With reference to FIG. 2, for example, bi-directional DC/AC converters are shown at $210_1$ ... $210_N$, and each is coupled at its DC side to a path between a PV panel $202_1$ ... $202_N$ and distributed storage $232_1$ ... $232_N$. In FIG. 2, each distributed storage $232_1$ ... $232_N$ includes a bi-directional DC/DC converter. Each bi-directional DC/AC converter $210_1$ ... $210_N$, is further coupled at its AC side to an electrical grid in the form of AC grid 150. Interconnections between a bi-directional DC/AC converter 310 and other components are also shown in FIG. 3. A bi-directional DC/DC converter is shown at 320 as being electrically coupled between the power generating component, specifically PV panel 302 in this example, and energy store 330. A DC side of bi-directional DC/AC converter 310 is coupled to a circuit path between PV panel 302 and bi-directional DC/DC converter 320, and an AC side of the bi-directional DC/AC converter can be coupled to an electrical grid at terminals 340, 342.

As shown in FIG. 3, bi-directional DC/AC converter 310 could include a first DC/DC stage 312 electrically coupled to the circuit path between the power generating component 302 (PV panel 302) and bi-directional DC/DC converter 320. First DC/DC stage 312 could include a DAB circuit, such as the DAB shown in FIG. 5A.

A controller such as controller 350 in FIG. 3 could be coupled to bi-directional DC/AC converter 310, to control current flowing through the bi-directional DC/AC converter by controlling switching in that converter. The current flowing through bi-directional DC/AC converter 310 in turn controls storage current flowing to or from energy store 330. For example, as described herein, if the current drawn by first DC/DC stage 312 increases then the current sourced by energy store 330 and DC/DC storage converter 320 will also increase and the SoC of energy store 330 will decrease. If the current drawn by first DC/DC stage 312 decreases then the current sourced by energy store 330 and DC/DC storage converter 320 will decrease and could be negative in which case the SoC of energy store 330 would increase.

The controller 350, or possibly a different controller or control module coupled to bi-directional DC/DC converter 320, could control voltage at a PV panel side of the converter at which the converter is electrically coupled to PV panel 302. This voltage control could be implemented, for example, through control of switching in bi-directional DC/DC converter 320. The controller could be configured to control switching in bi-directional DC/DC converter 320 to track MPP for PV panel 302.

Charging and discharging of energy store 330 could also be provided by controller 350 or multiple controllers / control modules, to provide power smoothing of output power from the power generating component, which in FIG. 3 is the PV panel 302.

For example, controller 350 could be configured to calculate an expected power output of the PV panel 302, and to control charging and discharging of energy store 330 based on the expected power output. The expected power output of PV panel 302 could be based on previous, time averaged power values of the output power from the PV panel.

Controller 350 could be configured to calculate the expected power output based on a moving average of the output power P from PV panel 302. In an embodiment, the moving average is a Hull Moving Average (HMA) of a form:

$$HMA = WMA\left(2 * WMA\left(P, \frac{M}{2}\right) - WMA(P, M), \sqrt{M}\right)$$

where $WMA(f(x), M)$

is a weighted moving average of the function f(x) calculated over the last M values.

Controller 350 could control charging and discharging of energy store 330 based on maintaining an SoC of the energy store at a target value. The target value of the SoC could be 50%, for example, but could instead be variable. For instance, a fixed SoC target value could be stored in a memory and accessed by controller 350. Different SoC target values could similarly be stored in a memory and accessed by controller 350 to provide different SoC target values at different times of day. Changes to SoC target values could then be made by changing the target value(s) stored in memory.

In an embodiment, controller 350 is coupled to bi-directional DC/AC converter 310, to control the converter to convert power from an electrical grid, such as AC grid 150 (FIG. 2) at terminals 340, 342 to DC for charging energy store 330 and maintaining the SoC of the energy store at the target value.

Controller 350 could control charging and discharging of energy store 330 to provide both power smoothing of output power from PV panel 302 and maintenance of the SoC of the energy store at a target value. In this case controller 350 could be configured to control the maintenance of the SoC with a slower response time than a response time of the power smoothing.

A stabilized power generator could include a single physical enclosure, attached to the power generating component, to enclose the energy store, the bi-directional DC/DC converter, and the bi-directional DC/AC converter. Such an enclosure could be attached to the back of a PV panel, for example, to hold other components of the stabilized power generator. This provides an integrated panel in which a PV panel is equipped with stabilized power generation, ready to install in a Building Integrated PV (BIPV) system or other power system.

A method of operation of a stabilized power generator involves controlling a bi-directional DC/DC converter and controlling a bi-directional DC/AC converter. The a bi-directional DC/DC converter is electrically coupled between a power generating component and an energy store, and is controlled for DC/DC conversion of power flow into and out of the energy store. The bi-directional DC/AC converter is electrically coupled at a DC side of the bi-directional DC/AC converter to a circuit path between the power generating component and the bi-directional DC/DC converter, is to be electrically coupled at an AC side of the bi-directional DC/AC converter to an electrical grid, and is controlled for AC/DC conversion of power flow between the AC grid and the bi-directional DC/DC converter. FIG. 3 shows an example of such a stabilized power generator, including bi-directional DC/DC converter 320, bi-directional DC/AC converter 310, a power generating component in the form of PV panel 302, and energy store 330. There could be one or more PV panels 302, as shown at $202_1$ ... $202_N$ in FIG. 2, for example.

In a PV panel embodiment, controlling bi-directional DC/DC converter 320 could involve controlling voltage at a PV panel side of the converter at which the converter is electrically coupled to PV panel 302, by controlling switching in that converter to track MPP for the PV panel. An MPPT block is shown at 560 in FIG. 5B, for example.

Controlling bi-directional DC/AC converter 310 could involve controlling current flowing through the converter by controlling switching in the converter. The current flowing through bi-directional DC/AC converter 310 controls storage current flowing to or from energy store 330 as described herein.

The storage current controls charging and discharging of energy store 330 to provide power smoothing of output power from PV panel 302 in an embodiment. FIG. 8 is a flow diagram illustrating an example power smoothing method, and is described in detail above. This example method 800 involves calculating an expected power output at 806, and the power correction applied at 810 could involve controlling current flowing through bi-directional DC/AC converter 310 (FIG. 3) based on the expected power output. Calculating the expected power output could involve calculating the expected power output based on previous, time averaged power values of output power, as shown at 804.

In another embodiment, calculating the expected power output involves calculating the expected power output based on a moving average of the output power P from the power generating component, the moving average comprising a Hull Moving Average (HMA) of a form:

$$HMA = WMA\left(2 * WMA\left(P, \frac{M}{2}\right) - WMA(P, M), \sqrt{M}\right)$$

where $WMA(f(x), M)$
is a weighted moving average of the function f(x) calculated over the last M values.

Controlling current flowing through bi-directional DC/AC converter 310 could also or instead involve controlling the current to provide maintenance of SoC of energy store 330 at a target value. FIG. 9 is a flow diagram of an example SoC maintenance method.

In an embodiment that involves controlling current flowing through bi-directional DC/AC converter 310 to provide both power smoothing and maintenance of SoC of energy store 330 at a target value, the control for maintenance of the SoC has a slower response time than a response time of control for power smoothing. FIG. 10 is a control flow diagram of an example combined power smoothing and SoC management control loop.

Considering a stabilized power generator implementation and its operating environment, a microgrid could include an AC power grid such as AC grid 150 (FIGS. 2 and 3) and a stabilized power generator $240_1$ ... $240_N$, 300. There could be one or more stabilized power generators. The stabilized power generator includes a power generating component (such as PV panels $202_1$ ... $202_N$ in FIG. 2, 302 in FIG. 3, 408 in FIG. 4, and 530 in FIG. 5A), an energy store 330 (FIG. 3), a bi-directional DC/DC converter 320 electrically coupled between the power generating component and the energy store, and a bi-directional DC/AC converter $210_1$ ... $210_N$, 310 having a DC port at its left-hand side in FIGS. 2 and 3 and an AC port at its right-hand side in FIGS. 2 and 3 (also shown as terminals 340, 342 in FIG. 3). Each bi-directional DC/AC converter $210_1$ ... $210_N$, 310 is electrically coupled to the DC/DC converter at its DC port and connected to the AC power grid at its AC port.

## Conclusion

What has been described is merely illustrative of the application of principles of embodiments of the present disclosure. Other arrangements and methods can be implemented by those skilled in the art.

For example, any divisions of function in the drawings are not intended to be limiting or exhaustive. Other embodiments could include additional, fewer, and/or different components than shown. Similarly, other method embodiments could include additional, fewer, and/or different operations performed in an order similar to or different from the orders shown in the drawings and described above.

Also, although described primarily in the context of methods and systems, other implementations are also contemplated, as instructions stored on a non-transitory computer-readable medium, for example.

## Claims

1. A stabilized power generator comprising:

    a power generating component;
    an energy store;
    a bi-directional Direct Current (DC) / DC converter electrically coupled between the power generating component and the energy store;
    a bi-directional DC / Alternating Current (AC) converter electrically coupled at a DC side of the bi-directional DC/AC converter to a circuit path between the power generating component and the bi-directional DC/DC converter, and to be electrically coupled at an AC side of the bi-directional DC/AC converter to an electrical grid;
    a controller to control charging and discharging of the energy store to provide power smoothing of output power from the power generating component.

2. The stabilized power generator of claim 1, the power generating component comprising a PhotoVoltaic (PV) panel.

3. The stabilized power generator of claim 1, the energy store comprising a capacitor.

4. The stabilized power generator of claim 1, the energy store comprising a battery.

5. The stabilized power generator of claim 1, the bi-directional DC/AC converter comprising a first DC/DC stage electrically coupled to the circuit path between the power generating component and the bi-directional DC/DC converter, the first DC/DC stage comprising a Dual Active Bridge (DAB) circuit.

6.  The stabilized power generator of claim 1, the controller being coupled to the bi-directional DC/AC converter, to control current flowing through the bi-directional DC/AC converter by controlling switching in the bi-directional DC/AC converter, the current flowing through the bi-directional DC/AC converter controlling storage current flowing to or from the energy store.

7.  The stabilized power generator of claim 1,
    the power generating component comprising a PhotoVoltaic (PV) panel,
    the controller being coupled to the bi-directional DC/DC converter, to control voltage at a PV panel side of the bi-directional DC/DC converter at which the bi-directional DC/DC converter is electrically coupled to the PV panel, by controlling switching in the bi-directional DC/DC converter,
    the controller being configured to control switching in the bi-directional DC/DC converter to track the Maximum Power Point (MPP) for the PV panel.

8.  The stabilized power generator of claim 1, the controller being configured to calculate an expected power output of the power generating component, and to control charging and discharging of the energy store based on the expected power output.

9.  The stabilized power generator of claim 1,
    the controller being further configured to control charging and discharging of the energy store based on maintaining a State of Charge (SoC) of the energy store at a target value,
    the controller being coupled to the bi-directional DC/AC converter, to control the bi-directional DC/AC converter to convert power from the electrical grid to DC for charging the energy store and maintaining the State of Charge (SoC) of the energy store at the target value

10. The stabilized power generator of claim 1,
    the controller being configured to control charging and discharging of the energy store to provide both power smoothing of output power from the power generating component and maintenance of a State of Charge (SoC) of the energy store at a target value,
    the controller being configured to control the maintenance of the SoC with a slower response time than a response time of the power smoothing.

11. The stabilized power generator of claim 1, further comprising:

    a single physical enclosure, attached to the power generating component, to enclose the energy store, the bi-directional DC/DC converter, the bi-directional DC/AC converter, and the controller.

12. A method comprising:

    controlling a bi-directional Direct Current (DC) / DC converter, electrically coupled between a power generating component and an energy store, for DC/DC conversion of power flow into and out of the energy store;
    controlling a bi-directional DC / Alternating Current (AC) converter, electrically coupled at a DC side of the bi-directional DC/AC converter to a circuit path between the power generating component and the bi-directional DC/DC converter and to be electrically coupled at an AC side of the bi-directional DC/AC converter to an electrical grid, for AC/DC conversion of power flow between the AC grid and the bi-directional DC/DC converter;
    controlling the bi-directional DC/AC converter comprising controlling current flowing through the bi-directional DC/AC converter by controlling switching in the bi-directional DC/AC converter, the current flowing through the bi-directional DC/AC converter controlling storage current flowing to or from the energy store, the storage current controlling charging and discharging of the energy store to provide power smoothing of output power from the power generating component.

13. The method of claim 12,
    the power generating component comprising a PhotoVoltaic (PV) panel,
    controlling the bi-directional DC/DC converter comprising controlling voltage at a PV panel side of the bi-directional DC/DC converter at which the bi-directional DC/DC converter is electrically coupled to the PV panel, by controlling switching in the bi-directional DC/DC converter,
    controlling the bi-directional DC/DC converter further comprising controlling switching in the bi-directional DC/DC converter to track the Maximum Power Point (MPP) for the PV panel.

**14.** The method of claim 12, further comprising:

calculating an expected power output of the power generating component,
controlling current flowing through the bi-directional DC/AC converter comprising controlling the current based on the expected power output.

**15.** The method of claim 14, calculating the expected power output comprising calculating the expected power output based on previous, time averaged power values of the output power from the power generating component.

**16.** The method of claim 14, calculating the expected power output comprising calculating the expected power output based on a moving average of the output power P from the power generating component, the moving average comprising a Hull Moving Average (HMA) of a form:

$$HMA = WMA\left(2 * WMA\left(P, {}^M\!/_2\right) - WMA(P, M), \sqrt{M}\right)$$

where $WMA(f(x), M)$
is a weighted moving average of the function f(x) calculated over the last M values.

**17.** The method of claim 12,
controlling current flowing through the bi-directional DC/AC converter comprising controlling the current to provide both power smoothing of output power from the power generating component and maintenance of a State of Charge (SoC) of the energy store at a target value,
the controlling comprising control for maintenance of the SoC with a slower response time than a response time of control for power smoothing.

FIG. 1

EP 2 827 467 A2

FIG. 2

FIG. 3

FIG. 4

FIG. 5A

FIG. 5B

FIG. 6

FIG.7

EP 2 827 467 A2

800

```
            ┌─────────────────────┐
    ┌──────▶│   CALCULATE P_PV    │
    │       │        802          │
    │       └─────────────────────┘
    │                 │
    │                 ▼
    │       ┌─────────────────────┐
    │       │ CALCULATE SMOOTHED  │
    │       │ PANEL POWER P_AVE   │
    │       │        804          │
    │       └─────────────────────┘
    │                 │
    │                 ▼
    │       ┌─────────────────────┐
    │       │  CALCULATE EXPECTED │
    │       │ PANEL POWER P_EXP   │
    │       │        806          │
    │       └─────────────────────┘
    │                 │
    │                 ▼
    │  ┌──────────────────────────────────┐
    │  │ CALCULATE POWER DIFFERENCE BETWEEN│
    │  │ EXPECTED AND ACTUAL P_DIFF=P_EXP-P_AVE│
    │  │              808                  │
    │  └──────────────────────────────────┘
    │                 │
    │                 ▼
    │       ┌─────────────────────┐
    │       │ APPLY POWER CORRECTION│
    │       │        810          │
    │       └─────────────────────┘
    │                 │
    └─────────────────┘
```

**CALCULATE $P_{PV}$**
802

**CALCULATE SMOOTHED PANEL POWER $P_{AVE}$**
804

**CALCULATE EXPECTED PANEL POWER $P_{EXP}$**
806

**CALCULATE POWER DIFFERENCE BETWEEN EXPECTED AND ACTUAL $P_{DIFF} = P_{EXP} - P_{AVE}$**
808

**APPLY POWER CORRECTION**
810

FIG.8

900

```
        ┌─────────────────────────┐
        │      ESTIMATE SoC        │
   ┌───▶│          902            │
   │    └─────────────────────────┘
   │                 │
   │                 ▼
   │    ┌─────────────────────────┐
   │    │  CALCULATE DIFFERENCE TO │
   │    │       TARGET SoC         │
   │    │          904            │
   │    └─────────────────────────┘
   │                 │
   │                 ▼
   │    ┌─────────────────────────┐
   │    │ CALCULATE A POWER CORRECTION│
   │    │          906            │
   │    └─────────────────────────┘
   │                 │
   │                 ▼
   │    ┌─────────────────────────┐
   │    │   APPLY POWER CORRECTION │
   │    │          908            │
   │    └─────────────────────────┘
   │                 │
   └─────────────────┘
```

FIG. 9

FIG. 10

EP 2 827 467 A2